(19) Europäisches Patentamt
European Patent Office
Office européen des brevets

(11) **EP 2 135 028 B1**

(12) **EUROPEAN PATENT SPECIFICATION**

(45) Date of publication and mention
of the grant of the patent:
**23.12.2015 Bulletin 2015/52**

(21) Application number: **05796389.4**

(22) Date of filing: **26.10.2005**

(51) Int Cl.:
*G01C 1/00* *(2006.01)*     *G01C 3/08* *(2006.01)*
*F42B 15/01* *(2006.01)*    *F41G 7/30* *(2006.01)*
*G05D 1/10* *(2006.01)*     *F42B 10/26* *(2006.01)*

(86) International application number:
**PCT/SE2005/001600**

(87) International publication number:
**WO 2006/046912 (04.05.2006 Gazette 2006/18)**

(54) **METHOD AND DEVICE FOR DETERMINATION OF ROLL ANGLE**

VERFAHREN UND VORRICHTUNG ZUR BESTIMMUNG DES ROLLWINKELS

PROCEDE ET DISPOSITIF DE DETERMINATION D'UN ANGLE DE ROULIS

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.10.2004  SE 0402611**

(43) Date of publication of application:
**23.12.2009  Bulletin 2009/52**

(73) Proprietor: **BAE Systems Bofors AB
691 80 Karlskoga (SE)**

(72) Inventor: **LÖNN, Olof
S-681 93 Kristinehamn (SE)**

(74) Representative: **Falk, Bengt
Saab Bofors Support AB
Patents and Trademarks
691 80 Karlskoga (SE)**

(56) References cited:
**RU-C2- 2 218 550     US-A- 4 542 870
US-A- 4 790 493      US-A- 5 886 257
US-A- 5 953 683      US-A- 6 163 021
US-B1- 6 208 936**

**Description**

The present invention relates to a method for determination of the roll angle of a shell like rotating body utilizing sensors for the detection of rotation signals in a body-fixed coordinate system, the sensors being placed along the reference axes of the body-fixed coordinate system along the roll axis and a first and a second perpendicular axis which are perpendicular to the roll axis, the sensors placed along the reference axes which are perpendicular to the roll axis emitting rotational signals that are periodic, the body-fixed rotation signals emitted by the sensors placed along the reference axis which are perpendicular to the roll axis being filtered.

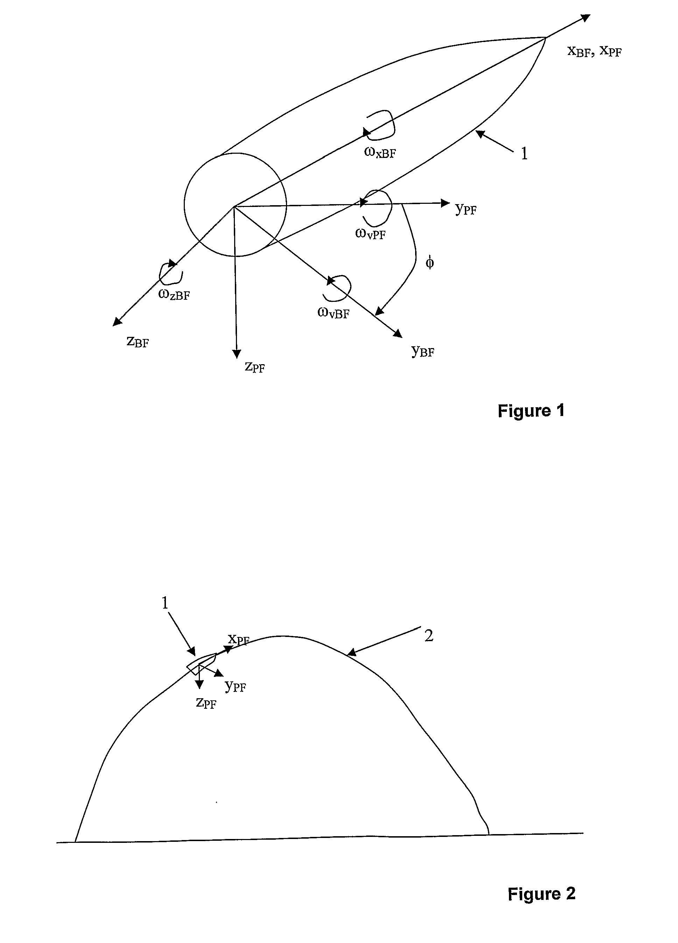

A shell that moves in a ballistic path, see Figure 2, will rotate the speed vector around an axis that lies in a horizontal plane. The rotation of the speed vector will take place around a plane-fixed y-axis $y_{PF}$. The plane-fixed coordinate system is defined in such a way that its origin follows the centre of gravity of the shell. The plane-fixed x-axis points forward in the shell along the axis of symmetry. The plane-fixed y-axis points to the right, viewed from the back, and lies in a plane that has the g-vector (g = gravitation) as a perpendicular. Finally, the plane-fixed z-axis points in such a way that the coordinate system has a right-hand rotation.

When rotation sensors are mounted in the shell, it is convenient to define a body-fixed coordinate system by the designation BF (Body Fixed), see Figure 1. When the shell rotates around the axis of symmetry, an angle arises between the y-axis and z-axis of the plane-fixed coordinate system and the respective y-axis and z-axis of the body-fixed coordinate system. This angle is designated "$\phi$" in Figure 1 and is called in the following the roll angle.

If three rotation-measuring sensors are mounted in the shell in such a way that they measure the rotation around respective body-fixed coordinate axes directly or via a linear combination, the inertial rotation vector can be expressed in the rotational directions $\omega_{xBF}$, $\omega_{yBF}$, $\omega_{zBF}$ of the body-fixed coordinate system.

The rotation around the plane-fixed y-axis can then be expressed as measurement signals from the body-fixed rotation sensor signals and the roll angle can thereafter be calculated.

$$\omega_{yBF} = \omega_{yPF} \cdot \cos(\phi)$$

$$\omega_{zBF} = -\omega_{yPF} \cdot \sin(\phi)$$

$$\phi = a\tan\left(\frac{-\omega_{zBF}}{\omega_{yBF}}\right)$$

However, the shell is acted upon not only by the g-vector but also by the atmosphere and, in particular, by wind turbulence in the atmosphere. This gives rise to moment interferences around the coordinate axes $y_{BF}$ and $z_{BF}$. This, in turn, gives rise to rotations in $\omega_{yBF}$ and $\omega_{zBF}$. These rotations can be greater by the power of 10 than the rotation $\omega_{yPF}$ caused by the effect of the g-vector on the path. In practice, therefore, the simple formula above can not be used to calculate the roll angle directly. In order to handle the body-fixed rotation sensor signals, the signals are therefore filtered. It has, however, proved difficult to filter effectively measurement signals that are non-linear. For example, linear filters of the Kalman type have proved to be difficult to use.

An example of an arrangement disclosing a roll, pitch and yaw rate gyro involving filtering of the Kalman type according to the preceding paragraph is known from US 5 886 257 A.

A missile in which the roll angle is obtained by integrating the roll rate gyro is known from US 4 542 870 A.

Navigation systems using magnetic sensors and involving a step of mixing down periodic measurement signals to zero in frequency are known from US 6 136 021 A and US 6 208 936 B1.

US 4 790 493 A discloses another example of roll measuring in connection to a missile and in this case one single rate gyro is arranged in cooperation with a sensor arrangement.

The object of the present invention is to achieve a method for the determination of roll angle that eliminates the rotation signal interferences caused by moment interferences that arise around the body's body-fixed coordinate axes $\omega_{yBF}$ and $\omega_{zBF}$ in a more effective and a simpler way. The object of the invention is achieved by a method characterized in that the body-fixed rotation signals emitted by the sensors placed along the reference axes ($y_{BF}$, $z_{BF}$) which are perpendicular to the roll axis are mixed with an estimated roll angle ($\phi$) determined from the rotation signal from the sensor placed along the roll axis and compensated by a corrective term ($\Delta\phi$), in that the rotation signals emitted by the sensors placed along the reference axes ($y_{BF}$, $z_{BF}$) which are perpendicular to the roll axis are thereafter low-pass filtered, and in that the roll angle ($\phi$) is determined from the rotation signal from the sensor placed along the roll axis

($x_{BF}$) and compensated by the corrective term ($\Delta\phi$) by calculating the following parameters:

$$LP_{in\_lower} = -\omega_{yBF} \cdot \cos(\phi + \Delta\phi) + \omega_{zBF} \cdot \sin(\phi + \Delta\phi)$$

$$LP_{in\_upper} = -\omega_{yBF} \cdot \sin(\phi + \Delta\phi) - \omega_{zBF} \cdot \cos(\phi + \Delta\phi)$$

wherein:

$\omega_{yBF}$ and $\omega_{zBF}$ are the rotation signals emitted from the sensors placed along the reference axes which are perpendicular to the roll axis,

$\phi$ is the roll angle, and $\Delta\phi$ is a roll compensation parameter,

LP indicates that the calculated parameters are low pass filtered, and further

determining the corrective term applied to the roll angle ($\phi$) determined from the rotation signal from the sensor placed along the roll axis according to the following calculation:

$$\Delta\phi = K \cdot \arctan[(LP_{in\_lower})/(LP_{in\_upper})]$$

wherein K is an amplification factor.

By means of the invention, a method for the determination of roll angle are achieved that estimate the roll angle in an effective way utilizing a smart non-linear filtration in a manageable low frequency range.

The invention will be described below in greater detail with reference to the attached drawings, in which:

Figure 1 shows definitions of coordinate axes and rotations.

Figure 2 shows an example of a ballistic shell path.

Figure 3 shows the frequency content of the measurement signals $\omega_{yBF}$, $\omega_{zBF}$ in an initial position.

Figure 4 shows the frequency content of the measurement signals $\omega_{yBF}$, $\omega_{zBF}$ after down-mixing to zero in frequency.

Figure 5 shows a filter device comprised in the device according to the invention.

Figure 6 shows an example of a $\Delta\phi$-eliminator that can be comprised in the filter device according to Figure 5.

Figure 7 shows a phase-locking filter comprised in the filter device according to Figure 5.

Figures 1 and 2 have already been discussed in the introduction to the description and there are therefore only some supplementary details to be discussed here. The shell shown in Figures 1 and 2 has been given the reference numeral 1 and follows a ballistic path 2.

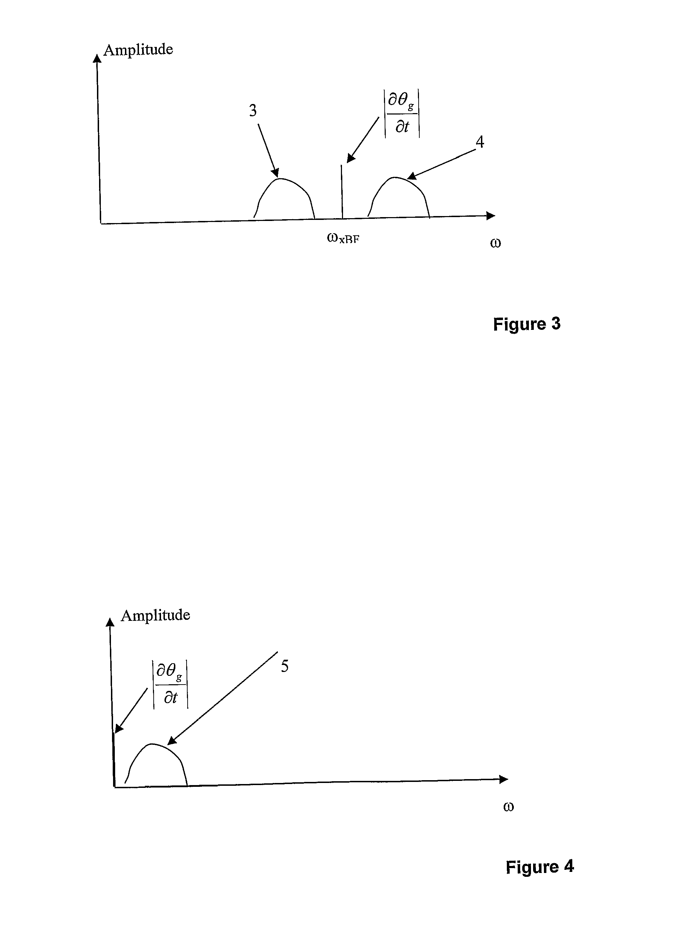

The function of the filter device is illustrated in Figures 3 and 4. The useful signal $\left|\dfrac{\partial\theta_g}{\partial t}\right|$ is originally at the frequency $\omega_{xBF}$ and is surrounded by interferences 3, 4 on each side of this frequency, see Figure 3.

After down-mixing, the useful signal $\left|\dfrac{\partial\theta_g}{\partial t}\right|$ is at the frequency zero and the interferences now designated 5 are now superimposed at somewhat higher frequencies than zero. The interferences 5 have now been brought to such a level as far as frequency is concerned that they can be filtered out by means of a low-pass filter.

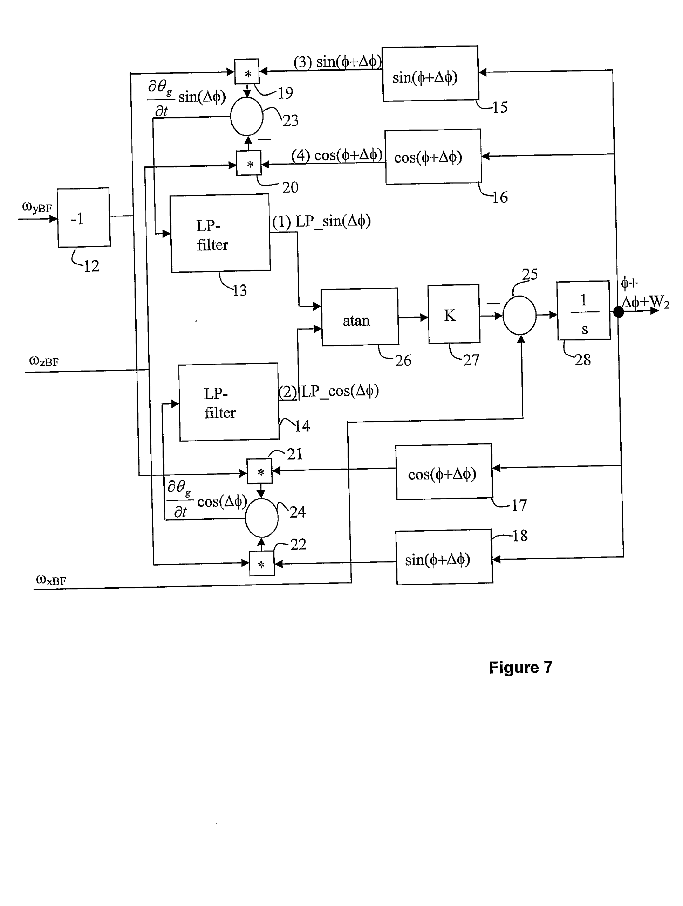

The down-mixing of the useful signal can be described by the following two equations that are input signals to the lower and upper low-pass filter respectively, see Figure 7.

$$LP_{in\_lower} = \frac{\partial \theta_g}{\partial t} \cdot \cos(\phi) \cdot \cos(\phi + \Delta\phi) + \frac{\partial \theta_g}{\partial t} \cdot \sin(\phi) \cdot \sin(\phi + \Delta\phi) = \frac{\partial \theta_g}{\partial t} \cdot \cos(\Delta\phi)$$

$$LP_{in\_upper} = \frac{\partial \theta_g}{\partial t} \cdot \cos(\phi) \cdot \sin(\phi + \Delta\phi) - \frac{\partial \theta_g}{\partial t} \cdot \sin(\phi) \cdot \cos(\phi + \Delta\phi) = \frac{\partial \theta_g}{\partial t} \cdot \sin(\Delta\phi)$$

The roll angle is designated $\phi$ and $\Delta\phi$ is the constant error in the roll angle.

By dividing these two signals above and thereafter applying the inverse tangent function, the phase position error $\Delta\phi$ is obtained. This error is amplified by a factor K and the result is a compensation term for $\omega_{xBF}$ that means that the filter homes in on zero in phase error irrespective of whether the error is positive or negative at the start of the filtering process. When there is a constant measurement error in the $\omega_{xBF}$-signal, it results in a constant phase error directly out from the phase-locking part of the filter. This constant phase error can be eliminated in a subsequent mathematical processing of the output signal by means of a $\Delta\phi$-eliminator.

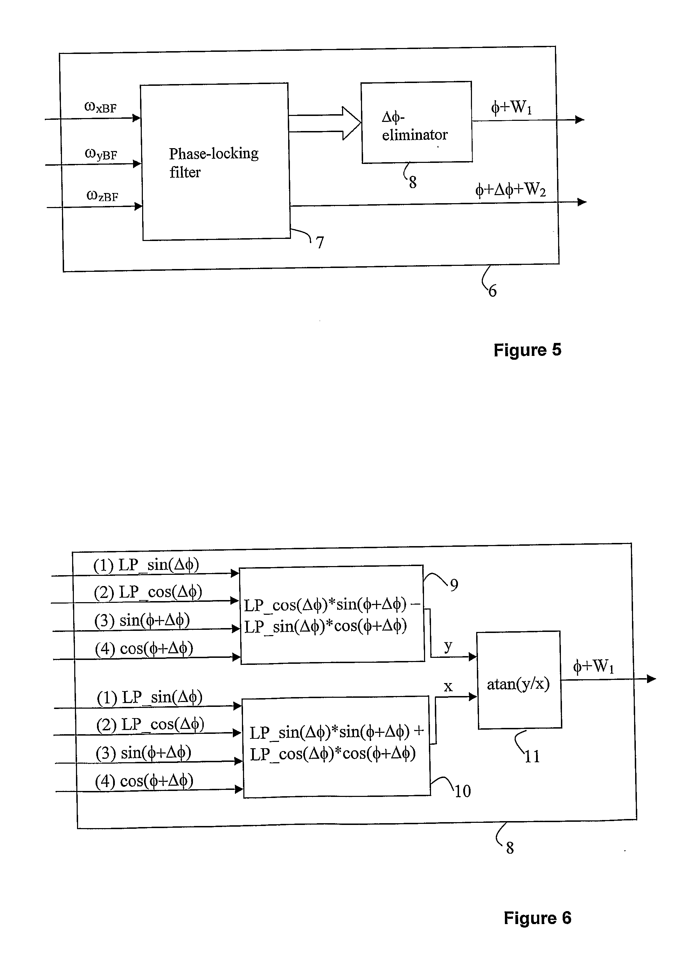

For a description of the function of the filter device with reference to Figures 5-7, block diagrams are used. It can thus be noted that $\dfrac{\partial \theta_g}{\partial t}$ is negatively related to the $\omega_{yBF}$-axis $\omega_{zBF}$-axis, which means that the measurement signal for $\omega_{yBF}$ is to be given a minus sign and that the sign is positive for $\omega_{zBF}$.

The filter device 6 according to Figure 5 comprises a phase-locking filter 7 and a $\Delta\phi$-eliminator 8. At the input of the filter device, there are three measurement signals emitted by sensors (not shown) that measure the rotation around the three body-fixed coordinate axes $\omega_{xBF}$, $\omega_{yBF}$, $\omega_{zBF}$. The filter device has also two output signals, of which the upper signal ($\phi + W_1$) does not have any constant error term, but on the other hand the noise level $W_1$ is higher than for the lower output signal. The lower output signal contains a constant error $\Delta\phi$. This error arises when the sensor for $\omega_{xBF}$ has a constant error. The noise $W_2$ of the lower output signal is, however, lower than the upper output signal. Which output signal is selected is dependent upon which requirements with regard to noise and constant error are made for the estimated roll angle.

Figure 6 shows the construction of the $\Delta\phi$-eliminator 8. In the $\Delta\phi$-eliminator there is a calculation unit that calculates:

```
y  =   LP_cos(Δφ)*sin(φ+Δφ)  -  LP_sin(Δφ)*cos(φ+Δφ)


x  =   LP_sin(Δφ)*sin(φ+Δφ)  +  LP_cos(Δφ)*cos(φ+Δφ)
```

and

```
                     atan (y/x) in order to obtain φ +  W₁,
```

The calculation unit can consist of a microprocessor that carries out mathematical operations shown in the blocks 9, 10 and 11. The input signals to the $\Delta\phi$-eliminator are obtained from the phase-locking filter 7 shown in Figure 7, where (1), (2), (3) and (4) show where the signals are available.

The phase-locking filter 7 in Figure 7 comprises the following blocks, namely a sign-changing block 12, two low-pass filters 13,14, sine- and cosine operators 15-18, multipliers 19-22, adders 23-25, inverse tangent function 26, amplifier 27 with amplification factor K and an integrating block 28.

The low-pass filters 13 and 14 that are shown in Figure 7 are adapted for the application in question. If rapid homing-in by the filter device is required, the low-pass filters 13 and 14 are set as high as possible in frequency, but with the requirement that the total phase-locking filter is stable. If, on the other hand, small errors and low noise are required, the low-pass filters 13 and 14 are designed with narrow bandwidth and of high order, but with the requirement that the phase-locking filter is to be stable. The amplification of the phase-locking filter (speed) can be set by varying

4

the amplification factor K. Normally, the amplification factor K should be adjusted when the low-pass filters 13 and 14 are adapted to the application in question.

**Claims**

1. Method for determination of the roll angle of a shell like rotating body (1) utilizing sensors for the detection of rotation signals in a body-fixed coordinate system (xBF, yBF, zBF), the sensors being placed along the reference axes of the body-fixed coordinate system along the roll axis (xBF) and

   a first and a second perpendicular axis (yBF, zBF) which are perpendicular to the roll axis, the sensors placed along the reference axes (yBF, zBF) which are perpendicular to the roll axis emitting rotational signals that are periodic, the body-fixed rotation signals emitted by the sensors placed along the reference axes (yBF, zBF) which are perpendicular to the roll axis being filtered (7),

   the method being **characterized in that** the body-fixed rotation signals emitted by the sensors placed along the reference axes (yBF, zBF) which are perpendicular to the roll axis are mixed with an estimated roll angle ($\Phi$) determined from the rotation signal from the sensor placed along the roll axis and compensated by a corrective term ($\Delta\Phi$), and thereafter low-pass filtered, by calculating the following parameters:

$$LP_{in\_lower} = -\omega_{yBF} \cdot \cos(\phi + \Delta\phi) + \omega_{zBF} \cdot \sin(\phi + \Delta\phi)$$

$$LP_{in\_upper} = -\omega_{yBF} \cdot \sin(\phi + \Delta\phi) - \omega_{zBF} \cdot \cos(\phi + \Delta\phi)$$

   wherein:

   $\omega$**yBF** and $\omega$**zBF** are the rotation signals emitted from the sensors placed along the reference axes which are perpendicular to the roll axis,

   $\Phi$ is the roll angle determined from the rotation signal from the sensor placed along the roll axis (XBF) , and $\Delta\Phi$ is the corrective term, and

   LP indicates that the calculated parameters are low pass filtered,

   the method being further **characterized in that** the corrective term ($\Delta\Phi$) is determined according to the following calculation:

$$\Delta\phi = K \cdot \arctan[(LP_{in\_lower}) / (LP_{in\_upper})]$$

   wherein K is an amplification factor

   and **in that** the roll angle is determined from the rotation signal from the sensor placed along the roll axis (xBF) and compensated by the corrective term ($\Delta\Phi$).

**Patentansprüche**

1. Verfahren zur Bestimmung des Rollwinkels eines Geschosses wie eines rotierenden Körpers (1) unter Verwendung von Sensoren für die Erfassung von Rotationssignalen in einem körperfesten Koordinatensystem (xBF, yBF, zBF), wobei die Sensoren entlang der Bezugsachsen des körperfesten Koordinatensystems entlang der Rollachse (xB) und einer ersten und einer zweiten rechtwinkligen Achse (yBF, zBF), die rechtwinklig zu der Rollachse sind, platziert sind, wobei die entlang der Bezugsachsen (yBF, zBF), die rechtwinklig zu der Rollachse sind, platzierten Sensoren Rotationssignale emittieren, die periodisch sind, wobei die körperfesten Rotationssignale, die von den Sensoren emittiert werden, die entlang der Bezugsachsen (yBF, zBF) platziert sind, die rechtwinklig zu der Rollachse sind, gefiltert (7) werden,

wobei das Verfahren **dadurch gekennzeichnet ist, dass** die körperfesten Rotationssignale, die von den Sensoren emittiert werden, die entlang der Bezugsachsen (yBF, zBF) platziert sind, die rechtwinklig zu der Rollachse sind, mit einem abgeschätzten Rollwinkel (Φ) gemischt werden, der von dem Rotationssignal von dem Sensor bestimmt wird, der entlang der Rollachse platziert ist, und mit einem Korrekturterm (ΔΦ) kompensiert wird, anschließend Tiefpass-gefiltert wird durch Berechnen der folgenden Parameter:

$$LP_{in\_lower} = -\omega_{yBF} \cdot \cos(\phi + \Delta\phi) + \omega_{zBF} \cdot \sin(\phi + \Delta\phi)$$

$$LP_{in\_upper} = -\omega_{yBF} \cdot \sin(\phi + \Delta\phi) + \omega_{zBF} \cdot \cos(\phi + \Delta\phi)$$

wobei:

$\omega_{yBF}$ und $\omega_{zBF}$ die Rotationssignale sind, die von den Sensoren emittiert werden, die entlang der Bezugsachsen platziert sind, die rechtwinklig zu der Rollachse sind,
Φ der Rollwinkel ist, der von dem Rotationssignal von dem Sensor bestimmt wurde, der entlang der Rollachse (XBF) platziert ist, und ΔΦ der Korrekturterm ist und LP die berechneten Parameter sind, die Tiefpass-gefiltert werden,
wobei das Verfahren ferner **dadurch gekennzeichnet ist, dass** der Korrekturterm (ΦΔ) entsprechend der folgenden Berechnung bestimmt wird:

$$\Delta\phi = K \cdot \arctan[(LP_{in\_lower}) / (LP_{in\_upper})]$$

wobei K ein Amplitudenfaktor ist,
und dadurch, dass der Rollwinkel aus dem Rotationssignal von dem Sensor bestimmt wird, der entlang der Rollachse (xBF) platziert ist und durch den Korrekturterm (ΔΦ) kompensiert wird.

**Revendications**

1. Procédé permettant de déterminer l'angle de roulis d'un corps rotatif en forme de coque (1) en utilisant des capteurs pour la détection de signaux de rotation dans un système de coordonnées fixé au corps (xBF, yBF, zBF), les capteurs étant placés le long des axes de référence du système de coordonnées fixé au corps le long de l'axe de roulis (xBF) et de premier et deuxième axes perpendiculaires (yBF, zBF) qui sont perpendiculaires à l'axe de roulis, les capteurs placés le long des axes de référence (yBF, zBF) qui sont perpendiculaires à l'axe de roulis émettant des signaux de rotation qui sont périodiques, les signaux de rotation fixés au corps émis par les capteurs placés le long des axes de référence (yBF, zBF) qui sont perpendiculaires à l'axe de roulis étant filtrés (7),
le procédé étant **caractérisé en ce que** les signaux de rotation fixés au corps émis par les capteurs placés le long des axes de référence (yBF, zBF) qui sont perpendiculaires à l'axe de roulis sont mélangés avec un angle de roulis estimé (φ) déterminé à partir du signal de rotation provenant du capteur placé le long de l'axe de roulis et compensé par un terme correctif (Δφ), puis soumis à un filtrage passe-bas, en calculant les paramètres suivants :

$$LP_{in\_lower} = -\omega_{yBF} \cdot \cos(\phi + \Delta\phi) + \omega_{zBF} \cdot \sin(\phi + \Delta\phi)$$

$$LP_{in\_upper} = -\omega_{yBF} \cdot \sin(\phi + \Delta\phi) - \omega_{zBF} \cdot \cos(\phi + \Delta\phi)$$

où :

$\omega_{yBF}$ et $\omega_{zBF}$ sont les signaux de rotation émis à partir des capteurs placés le long des axes de référence qui sont perpendiculaires à l'axe de roulis,

$\phi$ est l'angle de roulis déterminé à partir du signal de rotation provenant du capteur placé le long de l'axe de roulis (XBF), et $\Delta\phi$ est le terme correctif, et

LP indique que les paramètres calculés sont soumis à un filtrage passe-bas, le procédé étant en outre **caractérisé en ce que** le terme correctif ($\Delta\phi$) est déterminé selon le calcul suivant :

$$\Delta\phi = K \cdot \arctan[(LP_{in\_lower})/(LP_{in\_upper})]$$

où K est un facteur d'amplification

et **en ce que** l'angle de roulis est déterminé à partir du signal de rotation provenant du capteur placé le long de l'axe de roulis (xBF) et compensé par le terme correctif ($\Delta\phi$).

**Figure 1**

**Figure 2**

Amplitude

$\left|\dfrac{\partial \theta_g}{\partial t}\right|$

3

4

$\omega_{xBF}$

$\omega$

**Figure 3**

Amplitude

$\left|\dfrac{\partial \theta_g}{\partial t}\right|$

5

$\omega$

**Figure 4**

**Figure 5**

**Figure 6**

**Figure 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5886257 A
- US 4542870 A
- US 6136021 A
- US 6208936 B1
- US 4790493 A